# EUROPEAN PATENT SPECIFICATION

(11) **EP 2 274 941 B1**
(45) Date of publication and mention of the grant of the patent: **30.09.2015**
(21) Application number: 09742194.5
(22) Date of filing: 04.05.2009
(51) Int. Cl.: H04W 28/08, H04L 5/00, H04W 88/06, H04W 84/08

(54) **Balancing of common control channel load in a communications system**
Ausgleich der gemeinsamen Steuerkanallast in einem Kommunikationssystem
Equilibrage de la charge de canal de commande commun dans un système de communications

(30) Priority: 09.05.2008 FI 20085437
(43) Date of publication of application: 19.01.2011
(73) Proprietor: Airbus Defence and Space Oy, 00380 Helsinki (FI)
(72) Inventor: LAAKSONEN, Pirkko, FI-33340 Tampere (FI)
(74) Representative: Kolster Oy Ab
(86) International application number: PCT/FI2009/050352
(87) International publication number: WO 2009/135994

(56) References cited:
- WO-A-99/22542
- US-A- 6 064 889
- US-B1- 6 704 573
- "Terrestrial Trunked Radio (TETRA); Release 2; Designer's Guide; TETRA High-Speed Data (HSD); TETRA Enhanced Data Service (TEDS); ETSI TR 102 580" ETSI STANDARDS, LIS, SOPHIA ANTIPOLIS CEDEX, FRANCE, vol. TETRA-4, no. V1.1.1, 1 October 2007 (2007-10-01), XP014039712 ISSN: 0000-0001 cited in the application
- "Terrestrial Trunked Radio (TETRA); Voice plus Data (V+D); Part 2: Air Interface (AI); ETSI EN 300 392-2" ETSI STANDARDS, LIS, SOPHIA ANTIPOLIS CEDEX, FRANCE, vol. TETRA;TETRA-3, no. V3.2.1, 1 September 2007 (2007-09-01), XP014039575 ISSN: 0000-0001 cited in the application

## Description

### FIELD OF THE INVENTION

The present invention relates to a communication system and especially to use of common control channel in a mobile communications system.

### BACKGROUND OF THE INVENTION

In mobile communications systems common control channels are tools that the infrastructure uses to control the mobile station population. During operations, a mobile station monitors a common control channel of a base station and through that exchanges messages needed for essential operations of the system, like registering to the system, initiating connections for voice calls or for packet data transfer, or paging of the mobile station for incoming voice calls or packet data traffic.

Due to being involved in many critical operations of the communications system, the use of the common control channels needs to be carefully monitored and controlled. In case a common control channel of the system gets congested, the critical messages and their associated operations become seriously delayed. Overload in the common control channels may seriously disrupt operations of the communications system.

A primitive solution would be to add common control channels as much as necessary to provide reliable and non-congested pipelines for any amount of transmission of common control channel signaling messages. For example, in time-divisioned multiple access systems, if there are too many mobile stations in the cell for the main common control channel MCCH to deal with all the common control signaling, a base station controlling a cell may operate up to three common secondary control channels (common SCCHs) on the main carrier. Secondary channels, however, reserve the resource permanently and due to overall limited radio resources such additions are in many cases not possible or even viable.

In addition, in conventional systems the control mechanisms are based on dividing a mobile station population into groups or classes and using those classes to guide traffic to different common control channels. These divisions, however, change very slowly, or in many times do not change at all. With such non-dynamic control operations it is not possible to appropriately meet the challenges from the very dynamically varying loads.

US 6064889 discloses a solution in which a dual mode mobile station that is capable of using both analog and digital control channels is directed by the communications system to use a digital control channel in response to the communications system receiving from the mobile station a registration message indicating that the mobile station is a dual-mode mobile station.

US 6704573 discloses a solution on which a base station may dynamically change a free traffic channel to an overhead channel, if there are problems with the original overhead channel. When the problems are solved, the traffic channel temporarily used as an overhead channel, is again released to be used for traffic.

WO 99/22542 discloses a solution in which a congestion level is used as a basis for a criterion to determine whether or not to convert a traffic channel to a signalling channel and whether or not to reconvert a signaling channel to a traffic channel.

### SUMMARY OF THE INVENTION

An object of the present invention is thus to provide a new method for managing configurations and/or use of common control channels. The objects of the invention are achieved by a network element, a method and a computer program product, which is characterized by what is stated in the independent claims. The preferred embodiments of the invention are disclosed in the dependent claims.

The invention is applicable in a system that provides to the mobile stations two different types of air interfaces that are controlled by one control entity. The other air interface is a high-speed data channel interface where physical channels may be applied for both signalling and data messages. The switching and management infrastructure is configured with a criterion and the mobile stations are guided to control channels of the air interfaces according to results of testing the criterion.

Due to the invention the common control channel signalling load can be more accurately and dynamically balanced. The reliability of the operations of the communications system may thus be significantly improved without substantial investments to added transmission capacity.

### BRIEF DESCRIPTION OF THE DRAWINGS

In the following the invention will be described in greater detail by means of preferred embodiments with reference to the attached drawings, in which
Figure 1 shows basic elements of a TETRA communication system;
Figure 2 illustrates a channel resource structure of the integrated TETRA network in the embodiment of Figure 1;
Figure 3 illustrates an embodiment of a method according to the invention from the point of view of a switching and management infrastructure (SwMI) element;
Figure 4 illustrates a corresponding embodiment of a method according to the invention from the point of view of a mobile station;
Figure 5 illustrates another embodiment of a method according to the invention from the point of view of a SwMI element;
Figure 6A illustrates activities of the mobile station in the embodiment of Figures 3, 4, and Figure 6B illustrates activities of the mobile station in the embodiment of Figure 5; and
Figure 7 illustrates an example of a common control channel load balancing algorithm; and
Figure 8 illustrates an exemplary hardware configuration for the implementation of embodied apparatuses.

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention relates to a mobile communication system that applies at least two different air interfaces and mobile stations are instructed to channels of either of these air interfaces by means of one control entity. A variety of system configurations applying a variety of communication technologies may be used separately or in combinations to implement the embodiments of the invention. Communication systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

In the following the principles of the present invention are described by means of a communication system applying Terrestrial Trunked Radio (TETRA) technology. In the following, the invention is described using the terms and elements of the TETRA air interface as specified in the European Telecommunication Standards ETSI EN 300 392-2; European Standard (Telecommunications series); Terrestrial Trunked Radio (TETRA); Voice plus Data (V+D); Part 2: Air Interface (AI), and ETSI TR 102 580; Terrestrial Trunked Radio (TETRA); Release 2; Designer's Guide; TETRA High-Speed Data (HSD); TETRA Enhanced Data Service (TEDS), however, without limiting the invention to this one radio system technology.

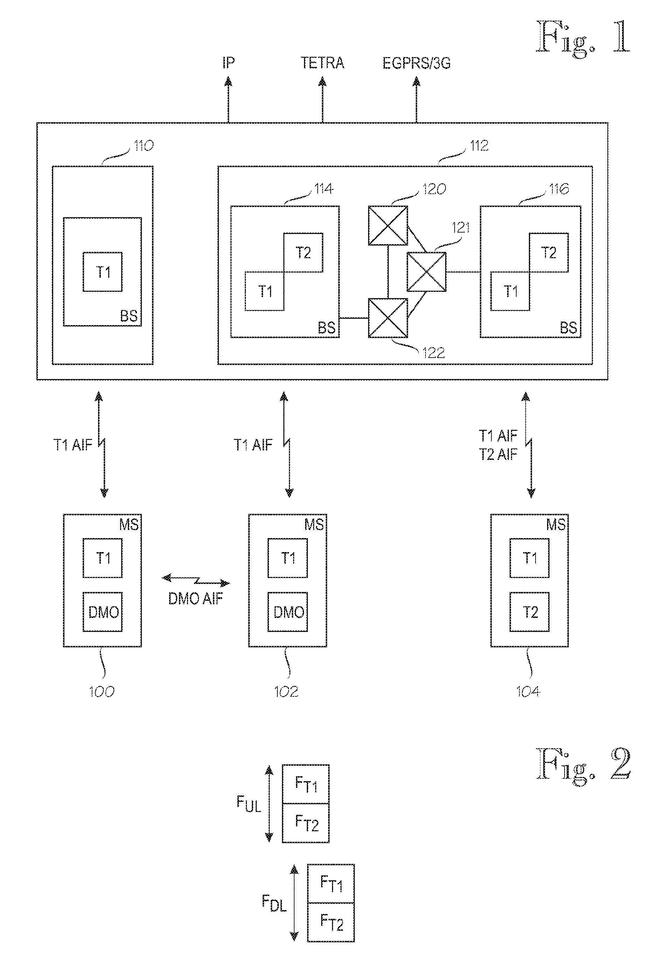

Figure 1 shows basic elements of a TETRA communication system. Mobile stations 100, 102, 104 applying the TETRA standard definitions may connect with a switching and management infrastructure and provide users with circuit mode calls and delivery of short data and Internet Protocol (IP) packet data. Packet data may be used by applications running directly within the mobile stations 100, 102, 104 or may be used by external data terminals (not shown) that may be connected with the mobile stations 100, 102, 104 via a Peripheral Equipment Interface (PEI) defined in TETRA standards. In the latter case PEI conveys packet data between an application and a connected mobile station.

TETRA technology, as such, is extensively documented and well known to a person skilled in the art. The European Telecommunications Standards Institute (ETSI) standard EN 300 392-2 V3.2.1 is the first version of a TETRA standard that incorporates a High-Speed Data (HSD) enhancement, generally referred to as "TEDS" or TETRA Enhanced Data Service. This incorporation has resulted in an enhanced air interface known as the TETRA Release 2 air interface. As a measure of integration, the access to the HSD channels is allowed via the TETRA Release 1 common control channel only. Furthermore, the 4-slot TDMA access structure of the air interface plus its TDMA frames, slots and subslots are being preserved.

The new HSD channels employ additional new modulations, channel coding and various coding rates. Three new HSD channel bandwidths (50 kHz, 100 kHz and 150 kHz) are also introduced to the standard in addition to the existing 25 kHz channel bandwidth. Accordingly, Figure 1 shows the embodied system in form of an integrated TETRA network 10 that includes a conventional TETRA 1 infrastructure 110 and a conventional TETRA 1 plus high-speed data enhanced infrastructure 112. The conventional infrastructure 110 and the enhanced infrastructure 112 may be connected via inter-system interface (ISI) and Internetwork Packet Interface (IPI). Common routers 120, 121, 122 are depicted for TETRA Release 1 and high-speed data IP packet distribution within the enhanced infrastructure 112.

A conventional mobile station 100 comprising a TETRA Release 1 transceiver T1 is able to communicate conventionally via the TETRA Release 1 air interface T1 AIF with the TETRA Release 1 infrastructure 110. Base stations 114, 116 of the enhanced infrastructure 112 are enhanced to have the conventional TETRA Release 1 transceivers T1 and additionally one or more high-speed data transceivers T2. A conventional mobile station 102 comprising a TETRA Release 1 transceiver T1 is able to communicate via an enhanced base station 114, and the common infrastructure 120, 121, 122 using all services and facilities offered by the TETRA Release 1 network whilst ignoring any high-speed data related signaling.

On the other hand, an enhanced high-speed data enabled mobile station 104 comprising a conventional TETRA Release 1 transceiver T1 and a high-speed data transceiver T2 and wishing to engage in high-speed data applications first registers to an enhanced base station 116 in the traditional way via the TETRA Release 1 common control channel, and informs the infrastructure of its high-speed data channel capabilities. The enhanced mobile station 104 is then ready to receive and/or transmit data over a conventional TETRA Release 1 common control channel or a TETRA Release 2 channel.

It should be noted that even if the transceivers T1 and T2 are shown as separate logical entities, it does not mean that the system elements comprise two different transceiver elements. A transceiver comprising T1 and/or T2 functionality may be implemented as one or more physical units without deviating from the scope of protection.

The mobile stations may, but do not necessarily comprise also a direct mode transceiver DMO that enables direct mode communication over the DMO air interface DMO AIF between the mobile stations. In the example of Figure 1 only the conventional mobile stations 100, 102 are shown with DMO. For a person skilled in the art it is however clear that inclusion or exclusion of DMO from a mobile station is independent of T1 and T2 interfaces, so any of the conventional or enhanced mobile stations may or may not include DMO.

The integrated TETRA network may comprise also conventional external interconnections to other TETRA networks (TETRA), external GPRS/3G networks (EGPRS/3G) or to an external IP packet data network (IP).

The invention relates to a mechanism implemented in the air interface of a communication and may thus be embodied at least in a mobile station and in a base station of the communication system. In the present embodiment, the desired access network is TETRA network and a term mobile station is used to represent an entity that is formed by any type of identification element and terminal equipment. The base station represents here to a switching and management infrastructure element in the embodied communications system. The base station is responsible for radio transmission and reception to or from the mobile station.

The identification element of the mobile station may be any type of data storage accessible to the terminal equipment for retrieving defined subscriber related data. As is clear to a person skilled in the art, the identification element may be implemented in various ways. For example, the identification element may be an integrated unit of the user equipment or a detachably connected identification card, also called a subscriber identity module. The identification element may alternatively be implemented by a software component included in the terminal element that maps one of the network protocol identifiers, for example a media access control (MAC) address of the communication path to the subscriber information of the user. The terminal equipment may be any equipment or a combination of several pieces of equipment, connected to provide a connection with the desired access network.

Figure 2 illustrates in more detail a channel resource structure of the integrated TETRA network in the embodiment of Figure 1. A TETRA air interface maintains a time-division multiple access (TDMA) structure using four timeslots per carrier. The timeslot is a basic unit of the TDMA structure, and a pair of timeslots associated to a pair of full frequency division duplex frequencies forms a physical channel. Figure 2 shows exemplary frequency allocations in an uplink frequency resource F_{UL} and a corresponding downlink frequency resource F_{DL}. The physical resource available to the TETRA high-speed data air interface radio sub-system is typically an allocation of a part of the radio spectrum of an integrated TETRA system. Accordingly, the uplink frequency resource F_{UL} comprises a subgroup of frequencies F_{T1} that are allocated to TETRA air interface 1 type physical channels and frequencies F_{T2} that are allocated to TETRA high-speed data air interface type physical channels. The allocation of radio resources to subgroups F_{T1} and F_{T2} may vary from base station to base station. Advantageously any frequency from the frequency resources F_{UL} and F_{DL} allocated to a base station may be allocated to subgroup F_{T1} or subgroup F_{T2}.

A control entity in the SwMI of the system recognizes these subgroup allocations and controls the operations such that a conventional mobile station comprising a TETRA Release 1 transceiver T1 is assigned to channels in subgroup F_{T1} only. An enhanced mobile station comprising T1 and T2 may be assigned to channels in either of the subgroups F_{T1} or F_{T2}, depending on the quality of service required by the enhanced mobile station.

In base station cells, one carrier is defined as a main carrier frequency. The frequency of the main carrier for the cell is broadcast by the infrastructure, and a main common control channel (MCCH) is located on timeslot 1 of the main carrier of the base station. There can also be up to 3 common secondary control channels on the main carrier. An integrated TETRA system enhanced with high speed capability still uses one of these common control channels in a single timeslot as a minimum.

Conventionally a mobile station uses common control channel to register to the system, to initiate voice calls and packet data transfer, and to be paged for incoming voice calls or packet data traffic. The mobile station typically enters the system via the common control channel, may be assigned to another channel via the common control channel and returns to the common control channel after completing the communication procedure in the assigned channel. The mobile station moves to subgroup of frequencies F_{T2} only when it participates in active packet data transfer and SwMI considers it necessary to assign the mobile station to a high-speed packet data channel (PDCH).

Before a mobile station can gain access to any packet data services, it goes via common control channel through a packet data registration procedure, called packet data protocol (PDP) context activation. The PDP context activation is typically initiated by the mobile station, and involves a negotiation of a PDP address and other parameters to be used during data transfer. A PDP address is attached to a TETRA subscriber identity ITSI. A unique PDP context may be established for each PDP address which is active on the network (i.e. ready to transmit or receive data). In addition to the PDP address and the ITSI, the PDP context includes also a SNDCP service access point identifier (SN-SAP), or more generally NSAPI (Network Service Access Point Identifier) through which the services of the SNDCP are available to the upper layer protocols. The TETRA PDP contexts stored in the mobile station and the SwMI thus establish a logical connection.

At registration, the mobile station indicates to the SwMI that it is an enhanced mobile station that comprises also T2 and is thus capable of high-speed channel transmission. SwMI attempts to assign the mobile station to a physical channel that is within the declared capabilities of the mobile station, provides adequate signal level and can satisfy the QoS requirements that the mobile station previously indicated to the SwMI.

In order to be able to transfer or receive data the mobile station receives from SwMI through the common control channel a channel allocation request indicating a suitable high-speed data channel in F_{T2}. When sending a first SN-DATA PDU comprising packet data, SwMI restarts a READY timer that is thereafter reset every time a new SN-DATA PDU is sent to the mobile station. When the READY timer expires in the SwMI SNDCP, it issues SN-END OF DATA PDU, including a new channel allocation to the mobile station, and enters a standby state. Correspondingly, the mobile station SNDCP receives SN-END OF DATA PDU, stops its READY timer, starts a STANDBY timer and enters standby state on the indicated channel.

Accordingly, in a conventional system the mobile station remains in a high-speed data channel only for the duration of the active packet data transfer. All other signalling exchange is done via the common control channel in TETRA air interface 1 side. However, the problem with use of the common control channel is that it is used for many operations and functions, many of which vary significantly and unpredictably in time. For example, a mobile station may be frequently transmitting AVL information with short data service (SDS) messages and this messaging may cause excessive load to the common control channel. On the other hand, the common control channel is very critical for the operations of the network and congestion in the common control channel may disrupt the whole operability of the communication system. Therefore mechanisms for controlling the common control channel use are constantly sought after.

In the present invention it is appreciated that the channel structure in the F_{T2} subgroup of frequencies provide channels that may be used for both signalling and data messages. This combination of the conventional common control channel and high-speed data channels allows SwMI to order mobile stations individually and dynamically to the F_{T2} subgroup of frequencies. This provides a powerful and dynamic tool for managing loads from common control channel signalling in the system.

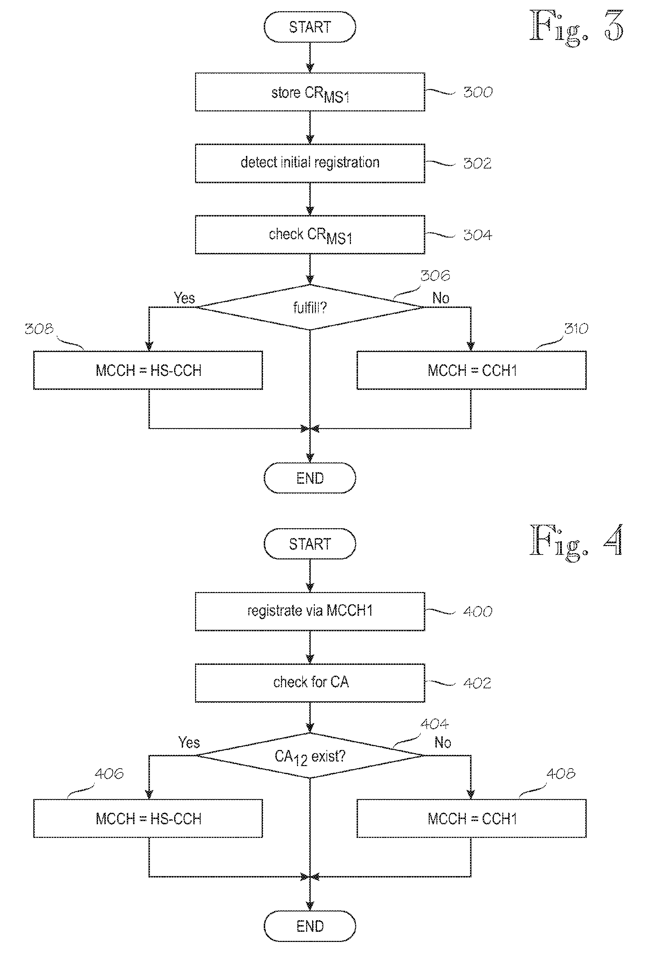

The flow chart of Figure 3 illustrates an embodiment of a method according to the invention from the point of view of a SwMI element. The SwMI element may be, for example, the enhanced base station of Figure 1. The method begins in a stage where the base station is commissioned to operate in the network, switched on and provides conventionally the common control channel CCH1 to the mobile stations within its coverage area. The base station stores (step 300) a criterion CR_{MS1} to be activated when a mobile station makes an initial registration (here with U-LOCATION UPDATE REQUEST) to the system via the base station. The criterion comprises a set of one or more conditions, for checking of which the base station will retrieve information when an initial registration by a mobile station is detected. If there is more than one condition in the criterion, the base station is also configured to check whether the conditions match in combination such that the criterion is fulfilled. The criterion is preferably, but not necessarily stored as a control algorithm that may be activated at any time an initial registration by a mobile station is detected.

Let us assume that the criterion CR_{MS1} comprises one condition C1 that checks whether the registering mobile station is interested in circuit switched calls that may get values 'YES' or 'NO'. During initial registration (step 302) the mobile station indicates to the base station that it is an enhanced mobile station that supports TETRA air interface 1 type physical channels and TETRA high-speed data air interface type physical channels. The mobile station also provides to the serving base station information on the type of mobile equipment used in the mobile station.

Typically the mobile stations are designed for circuit switched calls, but some dedicated terminal equipment may be designed only for a specific purpose that does not require use of voice calls. An example of such terminals is an automatic vehicle location (AVL) terminal that sends and receives AVL information and related map information. Another example would be a patient terminal in an ambulance, dedicated for transmitting patient monitoring data already when the patient is on the way to the hospital.

The condition C1 may be implemented by configuring the base station to identify on the basis of the mobile equipment information on such mobile equipment versions that do not necessarily utilize circuit switched calls. Other methods for determining the condition C1 are possible. The determination may be based, for example, on the capabilities of the terminal equipment, on a command provided by the user of the mobile station, or on definitions in subscriber information of the user of the mobile station.

During registration the base station checks (step 304) whether the criterion CR_{MS} is fulfilled by checking the mobile equipment information in the initial registering messages. If (step 306) the mobile station is recognised as an AVL terminal, the base station sends (step 308) it to a high-speed data channel HS-CCH in F_{T2} subgroup of frequencies by including a corresponding information element in an initial registration acknowledgement message (here D-LOCATION UPDATE ACCEPT). The mobile station begins to monitor HS-CCH as a normal common control channel in a conventional way and receives subsequently its common control channel information, as well as any other data messages via it. If (step 306) the mobile station is not recognised as any of the terminal versions that do not require circuit switched voice calls, the base station continues signaling (step 310) with it via the conventional common control channel in the F_{T1} subgroup of frequencies. Accordingly, the mobile station will communicate with the base station via CCH1 and move to a channel in the F_{T2} subgroup of frequencies only for the duration of an active packet data transfer.

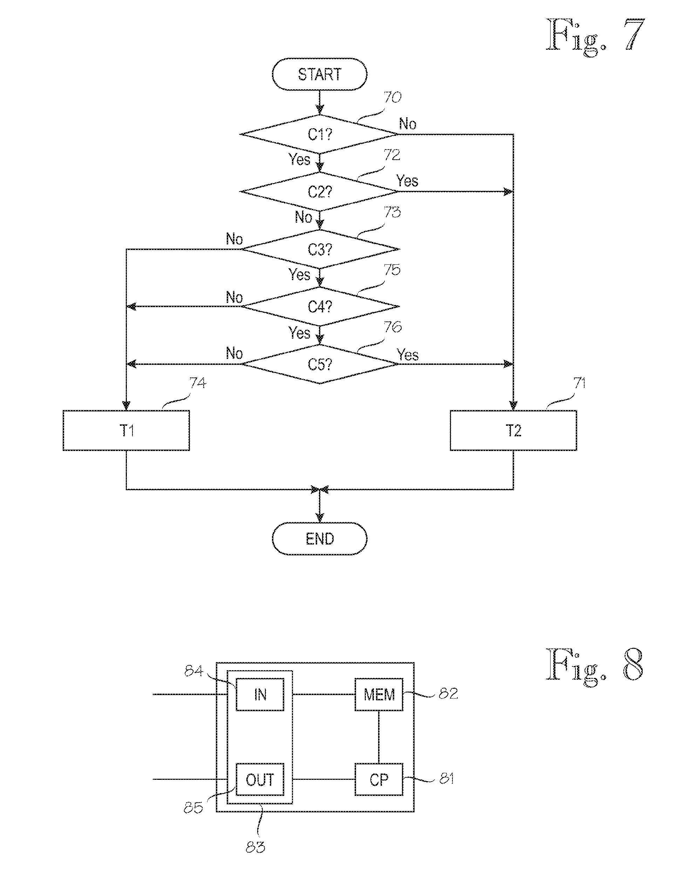

Due to the arrangement, the system is able to directly direct common control channel traffic by mobile stations that generate a lot of load to another parallel common control channel. For a person skilled in the art it is clear that the criterion and the conditions of the criterion may be configured in various ways. The advantages of the arrangement to the operations of the system also vary according to the criteria and conditions applied. A more detailed description on the criterion, the related conditions and their combination is provided with Figure7.

The flow chart of Figure 4 illustrates a corresponding embodiment of a method according to the invention from the point of view of a mobile station. The method begins in a stage where the mobile station is commissioned to operate in the network and switched on. The mobile station conventionally makes an initial registration (step 400) to the communication system via a base station, using the conventional common control channel CCH1 of that base station. At registration the mobile station provides to the base station an indication on the mobile equipment in use. The mobile station checks (step 402) whether SwMI has provided to it a channel assignment to a high-speed data channel HS-CCH in the F_{T2} subgroup of frequencies. If yes, the mobile station begins to listen to the transmissions in the high-speed data channel HS-CCH and receive common control messages, as well as any other data messages via it. Otherwise the mobile station continues conventional operation through CCH1.

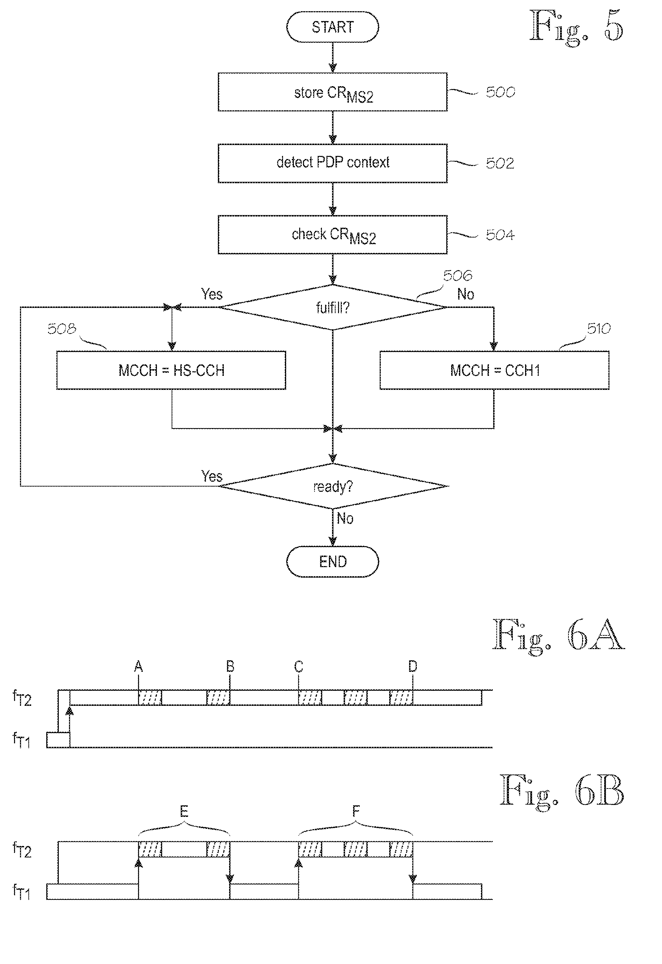

In another embodiment of the invention, SwMI determines the applied channel at the time of establishing a packet data context. The flow chart of Figure 5 illustrates an embodiment of a method according to the invention from the point of view of a SwMI element. The SwMI element may be, for example, the enhanced base station of Figure 1. The method begins in a stage where the base station is commissioned to operate in the network, switched on and provides conventionally the common control channel CCH1 to the mobile stations within its coverage area. The base station stores (step 500) a criterion CR_{MS2} to be activated when a mobile station creates a PDP context via the base station. During creation of the PDP context (step 502), the base station checks (step 504) whether the criterion CR_{MS2} is fulfilled.

If (step 506) the criterion is fulfilled, the base station sends (step 508) the mobile station to a high-speed data channel HS-CCH in F_{T2} subgroup of frequencies. The mobile station begins to monitor HS-CCH as a normal common control channel and receives subsequently its common control information, as well as any other data messages via it. When the mobile station or SWMI wants to stop the packet data service, the packet data context shall be deactivated. The mobile station is then directed to the common control channel in the F_{T1} subgroup of frequencies and continues there the normal control channel operations. During the active packet data context all signalling and data transfer is, however, done via the high speed data channel HS-CCH.

If (step 506) the criterion is not met, the base station continues signaling (step 510) with it via the conventional common control channel in the F_{T1} subgroup of frequencies. Accordingly, the mobile station will communicate with the base station via CCH1 and move to a channel in the F_{T2} subgroup of frequencies only for the duration of an active packet data transfer. The base station checks (step 512) whether the READY timer is still running. As long as it is, the base station will continue signalling with the mobile station via HS-CCH. Otherwise the procedure terminates.

Due to the arrangement, the decision on the applied common control channel may be done dynamically, basically on the basis of the present load situation in the base station and of the radio terminal capabilities to operate on the high speed data channels. For example, let us assume that the criterion CR_{MS2} comprises one condition C3 that provides dependency to the load in the CCH1. Condition C3 may be implemented, for example, by computing a value v_ul that represents the utilization ratio in the uplink. The computation of v_ul may take into consideration, for example, uplink random access collisions and the amount of uplink reserved access. The condition C3 comprises then also a threshold value Vᵤₗ for the uplink utilization rate.

Additionally, condition C3 may comprise computation of a value v_dl that represents the utilization ratio in the downlink. The computation of v_dl should take into consideration, for example, the amount of free slots in the downlink and the amount of data and signaling queuing to the channel. The condition C3 then comprises also a threshold value Vᵤₗ for the uplink utilization rate.

When a PDP context is created to the mobile station at a defined point, the base station checks the present value v_ul for the delay and compares v_ul with Vᵤₗ. In addition, the base station checks the present value v_dl for the delay and compares v_dl with Vᵤₗ. In case either of the Vᵤₗ or Vᵤₗ is exceeded, CCH1 is congested and the base station decides to send the mobile station to HS-CCH. Otherwise normal operation via CCH1 may be resumed.

For a person skilled in the art it is clear that the decision to guide the mobile station to CCH1 or HS-CCH may done in various ways without deviating from the scope of protection. For example, in the above example, the procedure could be complemented by a further check on the utilization ratio of HS-CCH1.

Also the event triggering the determination or de-determination of the applied common control channel may be varied without deviating from the scope of protection. The event does even not have to be associated to an action by the mobile station. The procedures where the mobile station and SwMI are already exchanging messages (initial registration or PDP context creation) provide a natural point to make the determination in SwMI. However, a communication the common control channel selection may be initiated separately by the mobile station or SwMI. For example, the criterion may be triggered by an explicit or implicit request by the mobile station user to change the common control channel. In such a case the condition would check which of the common control channels the user is named as a target. Alternatively, SwMI may be configured to check periodically loads in CCH1 or HS-CCH. Testing of the criterion would be triggered by the check and a condition would check whether either of the loads is exceeded and whether there is free capacity in the common control channel of the other air interface. Other such variations are possible within the scope of protection.

Figure 6A illustrates activities of the mobile station in the embodiment of Figures 3, 4, and Figure 6B illustrates activities of the mobile station in the embodiment of Figure 5. Figures 6A and 6B show a frequency f_{T1} in the F_{T1} subgroup of frequencies and a frequency f_{T2} in the F_{T2} subgroup of frequencies.

As shown in figure 6A, in the beginning the mobile station moves to frequency f_{T1} of the CCH1 and, as discussed above, receives in period 50 from the base station a channel assignment to a high-speed data channel HS-CCH of f_{T2}. In order to allow maximum flexibility to the signalling, in the present embodiment the high-speed data channel HS-CCH comprises all four timeslots of the TETRA frame. This means that the mobile station monitors all timeslots in f_{T2} and is therefore capable of receiving signalling messages (denoted with clear boxes) and user data (denoted with dotted boxes) practically at any time. It should be noted, however, that the high-speed data channel may be of any size, within the boundaries of the applied frame structure. For example, in the frame structure applied in the present embodiment, a frame in one frequency may comprise two one-slot channels used as common control channels and a frame in another frequency may comprise one four-slot channel used as a common control channel.

The arrangement regards only the physical channel so the mobile station may exchange via HS-CCH any type of signaling and data traffic, including information for packet data context activation and deactivation and sending AVL information using SDS messages. For example, in Figure 6A, at times A and C a packet data context is activated, and at times B and D the corresponding packet data context is deactivated. If the base station is capable to support voice service requests, also they can be initiated via HS-CCH.

As shown in Figure 6B, the times when the mobile station has an active packet data context and the times when the mobile station does not have an active packet data context in practise create mobile station modes. When the packet data context is activated and the mobile station receives signalling via HS-CCH, it may be considered to operate in packet data mode. In Figure 6B such periods are denoted with E and F. When the packet data context is not activated and the mobile station receives signalling via CCH1, it may be considered to operate in voice mode.

As discussed above, the number of timeslots applied in the high speed data channels may vary according to the application. The system may also have more than one high-speed data channel in the F_{T2} subgroup of frequencies. In such a case the base station needs to decide whether to use one of the data channels in the F_{T2} subgroup of frequencies and if yes, further which of the available high-speed data channels to use. The arrangement increases significantly the possibilities to balance the signaling load caused by the common control channel operations in the system. This improves and expedites the overall performance of the system and makes the system less vulnerable to congestion.

As discussed above, the configuration of the criteria and the related conditions may be designed in many ways without deviating from the scope of protection. The criterion may be ubiquitous such that one criterion is applied in the same form to all mobile stations. The criterion may be also a combination of shared conditions and individual conditions depending on, for example, the subscription data of the user or user organization. An individual condition may be stored in and retrieved from a subscriber database or even queried from the user via separate signaling.

Figure 7 illustrates an example of a common control channel load balancing algorithm corresponding to a criterion of five conditions. A first condition C1 is designed to check whether the registering mobile station is interested in circuit switched calls, as above, and may get values 'YES' or 'NO'. A second condition C2 is designed to check whether SwMI is able to support voice service requests via HS-CCH. A third condition C3 provides dependency to the load in the CCH1, as also described above. A fourth condition C4 is designed to interact via the expected amount of load caused by the mobile station to the common control channel. For example, the base station may be configured to determine whether the mobile station runs an application and if yes, the amount of signalling messages that application sends via the common control channel. On the basis of this determination, the base station may consider the expected load HIGH or NEUTRAL. For a fifth condition C5, the subscriber information of the mobile station users comprises a priority value according to which traffic will be prioritized and pre-emptied in critical situations. C5 is designed to check the subscriber data of the mobile station user and determine a priority value associated to the user.

The procedure begins in a stage where the base station is switched on and triggered to test the criterion, for example as in step 304 of Figure 3 or step 506 of Figure 5. The base station retrieves the criterion and its first condition C1. As discussed above, on the basis of C1, if (step 70) the mobile station is recognised to be a terminal that does not utilize circuit switched voice calls, the base station sends it to a high-speed data channel HS-CCH (step 71) in F_{T2} subgroup of frequencies. If not, the mobile station might in principle stay in CCH1. However, the base station further checks (step 72) with C2 to see whether the SwMI is able to support voice service requests via HS-CCH. If yes, the base station sends the mobile station to HS-CCH in any way to prevent congestion in advance. If not, the base station checks (step 73) with C3 whether the common control channel is congested or not. If not, the base station leaves the mobile station to CCH1 (step 74). If yes, the base station further checks (step 75) with C4 whether the mobile station runs heavy applications that load the common control channel greatly. If not, the base station leaves the mobile station to CCH1 (step 74). If yes, the base station further checks (step 76) with C5 whether the mobile station belongs to a group with very low priority. If yes, the base station sends it to a high-speed data channel HS-CCH even if the voice services will then be disabled from the user. If not, the base station leaves the mobile station to CCH1 (step 74) even if its load to the common control channel is heavy. It is understood that the load may accumulate in CCH1 and HS-CCH side. The invention enables to deal with the loads by balancing it between different common control channels. At some point the effect of balancing is exhausted and final decisions like the one in step 76 need to be made.

For a person skilled in the art it is clear that the procedure of Figure 7 is exemplary only. The conditions and their causalities may be varied in many ways without deviating from the scope of protection. For example, if it is expected that the common control signaling via the high-speed data channel is actually better, it may be decided to leave the users with lower priority to CCH1 and guide the ones with higher priority to HS-CCH It may thus be seen that the invention provides the users of the communications system with a straightforward and robust procedure for controlling the common control channel load using an individually selected combination of general, dynamic, organization-specific, and subscriber-specific conditions.

Figure 8 illustrates an exemplary hardware configuration for the implementation of embodied apparatuses, for example applicable as the SwMI element, or the mobile station of the above embodiments. The apparatus comprises a control unit 81, a processor element that comprises an arithmetic logic module, a number of special registers and control circuits. The apparatus also comprises a memory unit 82, a data medium where computer-readable data or programs or user data can be stored. The memory means typically comprise memory modules that allow both reading and writing (RAM), and memory modules whose contents can only be read (ROM). The apparatus also comprises an interface unit 83 with input unit 84 for inputting data for internal processing in the apparatus, and output unit 85 for outputting data from the internal processes of the apparatus.

Examples of said input unit 84 in SwMI element comprise plug-in units acting as a gateway for information delivered to its external connection points. For receiving information from the operator, the input unit 84 may also comprise a keypad, or a touch screen, a microphone, or the like. Examples of said output unit 85 in the network node NN include plug-in unit feeding information to the lines connected to its external connection points. For outputting information to the operator, the output unit 85 may also comprise a screen, a touch screen, a loudspeaker, or the like.

The interface unit 83 of a mobile station typically comprises at least a user interface unit for communicating with the user and a radio interface unit for communication over the radio access network. In addition, the interface unit comprises the additional communication interface unit, for communication over another type of networks, or in another frequency, or over local communication technologies, as described above.

The control unit 81, memory unit 82, and interface block 83 are electrically interconnected to perform systematic execution of operations on received and/or stored data according to predefined, essentially programmed processes of the apparatus. In solutions according to the embodiments of the invention, these operations comprise functions for implementing the logical units, operations and interfaces of the SwMI entity of a mobile station, as described in Figures 1 to 6 above.

The units and blocks of the apparatus may be implemented as one or more integrated circuits, such as application-specific integrated circuits (ASIC). Other hardware embodiments are also feasible, such as a circuit built of separate logic components. A hybrid of these different may also be applied. All modifications and configurations required for implementing functionality of an embodiment may be performed as routines, which may be implemented as added or updated software routines, application circuits (ASIC) and/or programmable circuits. Software routines may be downloaded into the apparatus.

It should be noted that only elements necessary for disclosing the present embodiment are illustrated in Figure 8. For a person skilled in the art it is clear that communication apparatuses comprise a plurality of further elements and functionalities not explicitly illustrated herein. In addition, the blocks illustrate logical or functional units that may be implemented in or with one or more physical units, notwithstanding whether they are illustrated as one or more blocks in Figure 7.

The computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

It will be obvious to a person skilled in the art that, as the technology advances, the inventive concept can be implemented in various ways. The invention and its embodiments are not limited to the examples described above but may vary within the scope of the claims.

## Claims

1. A network element (114, 116) for a communications system, comprising:
an interface unit (83) for communicating over a first air interface with a first set of physical channels or over a second air interface with a second set of physical channels;
a control unit (81) for assigning communications to a physical channel of the first air interface or a physical channel of the second air interface; **characterized by**
a memory (82) configured to store, for a mobile station configured to support both the first air interface and the second air interface and being capable of utilizing voice communication service,
a criterion comprising a condition that provides dependency to willingness of the mobile station to utilize voice communication service;
the control unit (81) being configured to test the criterion by checking fulfilment of the condition and to either assign common control channel communications of the mobile station to a channel of the second air interface or to continue the use of a common control channel of the first air interface according to results from the testing the criterion.

2. A network element (114, 116) according to claim 1, **characterized in that** the second set of physical channels comprises high-speed data channels each corresponding to one or more timeslots of a frame.

3. A network element (114, 116) according to claim 1 or 2, **characterized in that** testing of the criterion is triggered by a defined communication event between the mobile station and the base station.

4. A network element (114, 116) according to claim 3, **characterized in that** the defined communication event is an initial registration of the mobile station, or a creation of a packet data protocol context.

5. A network element (114, 116) according to claim 1, **charac-terized** in that the network element (114, 116) is configured to perform a periodical check on load status in common control channels of the communications system, and testing of the criterion is triggered by completion of the periodical check.

6. A network element (114, 116) according to claim 1, **characterized**in that testing of the criterion is triggered by the network element (114, 116) receiving a user request to change the common control channel from the mobile station.

7. A network element (114, 116) according to any of the preceding claims, **characterized in that** the criterion comprises one or more conditions, a condition providing dependency to an operational item of the communications system and the result of the testing of the criterion is derived from the results of testing of the conditions.

8. A network element (114, 116) according to claim 7, **characterized in that** the criterion comprises a condition that provides dependency to a present load status in a common control channel of the first air interface or of the second air interface, a condition that provides dependency to a capability of the second air interface to support voice communication service signalling, or a condition that provides dependency to an expected common control channel signalling load by the mobile station.

9. A network element (114, 116) according to claim 7, **characterized in that** the criterion is implemented as a control algorithm that comprises a combination of at least two conditions of claims 6 to 8.

10. A network element (114, 116) according to claim 5, **characterized in that** the network element (114, 116) may transmit common control channel signalling in two or more channels of the first air interface and the second air interface and is configured to select the channel for transmission on the basis of the load status in these two or more channels.

11. A method, comprising:
operating a network element in a communications system;
communicating over a first air interface with a first set of physical channels or over a second air interface with a second set of physical channels;
assigning communications to a physical channel of the first air interface or a physical channel of the second air interface; **characterized by**
storing (300, 500) for a mobile station configured to support both the first air interface and the second air interface and being capable of utilizing voice communication service, a criterion comprising a condition that provides dependency to willingness of the mobile station to utilize voice communication service;
testing (306, 506) the criterion by checking fulfilment of the condition; and
either assigning (308, 508) common control channel communications of the mobile station to a channel of the second air interface or continuing (310, 510) the use of a common control channel of the first air interface according to results from the testing the criterion.

12. A method as claimed in claim 11, further comprising:
assigning common control channel communications of the mobile station to the channel of the second air interface in response to the result indicating that the mobile station is not willing to utilize voice communication service.

13. A computer program product readable by a computer and encoding a computer program of instructions for executing a computer process for controlling functions in an information system, **characterized by** the process including steps of the method of claim 11 or 12.

## Patentansprüche

1. Netzwerkelement (114, 116) für ein Kommunikationssystem, wobei vorgesehen sind:
eine Schnittstelleneinheit (83) zum Kommunizieren über eine erste Luftschnittstelle mit einer ersten Gruppe physikalischer Kanäle oder über eine zweite Luftschnittstelle mit einer zweiten Gruppe physikalischer Kanäle;
eine Steuereinheit (81) zum Zuordnen von Kommunikationsvorgängen zu einem physikalischen Kanal der ersten Luftschnittstelle oder einem physikalischen Kanal der zweiten Luftschnittstelle;
**gekennzeichnet durch**:
einen Speicher (82), der dazu ausgebildet ist, um zu speichern, für eine Mobilstation, die dazu ausgebildet ist, sowohl die erste Luftschnittstelle als auch die zweite Luftschnittstelle zu unterstützen, und die Sprachkommunikationsdienst benutzen kann,
ein Kriterium, das eine Bedingung aufweist, welche Abhängigkeit zur Bereitschaft der Mobilstation zur Verfügung stellt, Sprachkommunikationsdienst zu benutzen;
wobei die Steuereinheit (81) dazu ausgebildet ist, das Kriterium **durch** Untersuchen der Erfüllung der Bedingung zu testen, und entweder gemeinsame Steuerkanal-Kommunikationsvorgänge der Mobilstation zu einem Kanal der zweiten Luftschnittstelle zuzuordnen, oder den Einsatz eines gemeinsamen Steuerkanals der ersten Luftschnittstelle fortzusetzen, entsprechend Ergebnissen von der Untersuchung des Kriteriums.

2. Netzwerkelement (114, 116) nach Anspruch 1, **dadurch gekennzeichnet, dass** die zweite Gruppe physikalischer Kanäle Hochgeschwindigkeitsdatenkanäle aufweist, die jeweils einem Zeitschlitz oder mehreren Zeitschlitzen eines Rahmens entsprechen.

3. Netzwerkelement (114, 116) nach Anspruch 1 oder 2, **dadurch gekennzeichnet, dass** die Untersuchung des Kriteriums durch ein definiertes Kommunikationsereignis zwischen der Mobilstation und der Basisstation ausgelöst wird.

4. Netzwerkelement (114, 116) nach Anspruch 3, **dadurch gekennzeichnet, dass** das definierte Kommunikationsereignis eine ursprüngliche Registrierung der Mobilstation ist, oder eine Schaffung eines Paketdatenprotokollkontextes.

5. Netzwerkelement (114, 116) nach Anspruch 1, **dadurch gekennzeichnet, dass** das Netzwerkelement (114, 116) dazu ausgebildet ist, eine periodische Überprüfung des Belastungszustandes in gemeinsamen Steuerkanälen des Kommunikationssystems durchzuführen, und das Untersuchen des Kriteriums durch Vervollständigung der periodischen Überprüfung ausgelöst wird.

6. Netzwerkelement (114, 116) nach Anspruch 1, **dadurch gekennzeichnet, dass** das Untersuchen des Kriteriums dadurch ausgelöst wird, dass das Netzwerkelement (114, 116) eine Benutzeranforderung zur Änderung des gemeinsamen Steuerkanals von der Mobilstation empfängt.

7. Netzwerkelement (114, 116) nach einem der voranstehenden Ansprüche, **dadurch gekennzeichnet, dass** das Kriterium eine Bedingung oder mehrere Bedingungen aufweist, wobei eine Bedingung Abhängigkeit von einer operativen Gegebenheit des Kommunikationssystems zur Verfügung stellt, und das Ergebnis der Überprüfung des Kriteriums von den Ergebnissen der Untersuchung der Bedingungen abgeleitet wird.

8. Netzwerkelement (114, 116) nach Anspruch 7, **dadurch gekennzeichnet, dass** das Kriterium eine Bedingung aufweist, welche Abhängigkeit von einem momentanen Belastungszustand in einem gemeinsamen Steuerkanal der ersten Luftschnittstelle oder der zweiten Luftschnittstelle zur Verfügung stellt, eine Bedingung, welche Abhängigkeit der zweiten Luftschnittstelle zur Verfügung stellt, Signalisierung von Sprachkommunikationsdienst zu unterstützen, oder eine Bedingung, welche Abhängigkeit von einer erwarteten Signalisierungsbelastung des gemeinsamen Steuerkanals durch die Mobilstation zur Verfügung stellt.

9. Netzwerkelement (114, 116) nach Anspruch 7, **dadurch gekennzeichnet, dass** das Kriterium als ein Steueralgorithmus implementiert ist, der eine Kombination von zumindest zwei Bedingungen der Ansprüche 6 bis 8 aufweist.

10. Netzwerkelement (114, 116) nach Anspruch 5, **dadurch gekennzeichnet, dass** das Netzwerkelement (114, 116) Signalisierung des gemeinsamen Steuerkanals in zwei oder mehr Kanälen der ersten Luftschnittstelle und der zweiten Luftschnittstelle übertragen kann, und dazu ausgebildet ist, den Kanal für die Übertragung auf der Grundlage des Belastungszustandes in diesen zwei oder mehr Kanälen auszuwählen.

11. Verfahren, welches aufweist:
Betreiben eines Netzwerkelementes in einem Kommunikationselement;
Kommunizieren über eine erste Luftschnittstelle mit einer ersten Gruppe physikalischer Kanäle oder über eine zweite Luftschnittstelle mit einer zweiten Gruppe physikalischer Kanäle;
Zuordnen von Kommunikationsvorgängen zu einem physikalischen Kanal der ersten Luftschnittstelle oder einem physikalischen Kanal der zweiten Luftschnittstelle; **gekennzeichnet durch**:
Speichern (300, 500) für eine Mobilstation, die dazu ausgebildet ist, sowohl die erste Luftschnittstelle als auch die zweite Luftschnittstelle zu unterstützen, und welche Sprachkommunikationsdienst benutzen kann,
ein Kriterium, das eine Bedingung aufweist, welche Abhängigkeit zur Bereitschaft der Mobilstation zum Benutzen von Sprachkommunikationsdienst zur Verfügung stellt;
Untersuchen (306, 506) des Kriteriums **durch** Überprüfung der Erfüllung der Bedingung;
entweder Zuordnen (308, 508) von Kommunikationsvorgängen des gemeinsamen Steuerkanals der Mobilstation zu einem Kanal der zweiten Luftschnittstelle oder Fortsetzen (310, 510) der Benutzung eines gemeinsamen Steuerkanals der ersten Luftschnittstelle entsprechend Ergebnissen der Untersuchung des Kriteriums.

12. Verfahren nach Anspruch 11, welches weiterhin aufweist:
Zuordnen von Kommunikationsvorgängen des gemeinsamen Steuerkanals der Mobilstation zu dem Kanal der zweiten Luftschnittstelle in Reaktion auf das Ergebnis, welches anzeigt, dass die Mobilstation nicht willig ist, Sprachkommunikationsdienst zu benutzen.

13. Computerprogrammprodukt, das von einem Computer lesbar ist, und ein Computerprogramm von Befehlen zum Ausführen eines Computerprozesses zum Steuern von Funktionen in einem Informationssystem codiert, **dadurch gekennzeichnet, dass** der Prozess Schritte des Verfahrens von Anspruch 11 oder 12 enthält.

## Revendications

1. Un élément de réseau (114, 116) pour un système de communication, comprenant :
une unité d'interface (83) pour communiquer sur une première interface radio avec un premier ensemble de canaux physiques ou sur une deuxième interface radio avec un deuxième ensemble de canaux physiques ;
une unité de commande (81) pour attribuer des communications à un canal physique de la première interface radio ou à un canal physique de la deuxième interface radio ;
**caractérisé par**
une mémoire (82) configurée pour stocker, pour une station mobile configurée pour supporter à la fois la première interface radio et la deuxième interface radio, et étant apte à utiliser un service de communication vocale,
un critère comprenant une condition relative à une dépendance à la volonté de la station mobile d'utiliser le service de communication vocale ;
l'unité de commande (81) étant configurée pour tester le critère en vérifiant la réalisation de la condition, et étant à même, selon les résultats du test du critère, soit d'attribuer des communications communes de canal de commande de la station mobile à un canal de la deuxième interface radio, soit de continuer l'utilisation d'un canal de commande commun de la première interface radio.

2. Un élément de réseau (114, 116) selon la revendication 1, **caractérisé en ce que** le deuxième ensemble de canaux physiques comporte des canaux de données à grande vitesse correspondant chacun à un ou plusieurs créneaux temporels d'une trame.

3. Un élément de réseau (114, 116) selon la revendication 1 ou la revendication 2, **caractérisé en ce que** le test du critère est déclenché par un événement de communication défini entre la station mobile et la station de base.

4. Un élément de réseau (114, 116) selon la revendication 3, **caractérisé en ce que** l'événement de communication défini est un premier enregistrement de la station mobile, ou est la création d'un contexte de protocole de données par paquets.

5. Un élément de réseau (114, 116) selon la revendication 1, **caractérisé en ce que** l'élément de réseau (114, 116) est configuré pour effectuer une vérification périodique de l'état de charge dans des canaux de commande communs du système de communication, et le test du critère est déclenché par achèvement de la vérification périodique.

6. Un élément de réseau (114, 116) selon la revendication 1, **caractérisé en ce que** le test du critère est déclenché par l'élément de réseau (114, 116) recevant une demande d'utilisateur pour changer le canal de commande commun à partir de la station mobile.

7. Un élément de réseau (114, 116) selon l'une quelconque des revendications précédentes, **caractérisé en ce que** le critère comprend une ou plusieurs conditions, une condition étant relative à une dépendance à un élément de fonctionnement du système de communication, et le résultat du test du critère est dérivé des résultats des tests des conditions.

8. Un élément de réseau (114, 116) selon la revendication 7, **caractérisé en ce que** le critère comprend une condition relative à une dépendance à un état de charge présent dans un canal de commande commun de la première interface radio ou de la deuxième interface radio, une condition relative à une dépendance à une capacité de la deuxième interface radio à supporter une signalisation d'un service de communication vocale, ou une condition relative à une dépendance à une charge de signalisation attendue du canal de commande commun par la station mobile.

9. Un élément de réseau (114, 116) selon la revendication 7, **caractérisé en ce que** le critère est mis en oeuvre en tant qu'algorithme de commande qui comprend une combinaison d'au moins deux conditions selon les revendications 6 à 8.

10. Un élément de réseau (114, 116) selon la revendication 5, **caractérisé en ce que** l'élément de réseau (114, 116) peut transmettre la signalisation de canal de commande commun dans deux ou plusieurs canaux de la première interface radio et de la deuxième interface radio, et est configuré pour sélectionner le canal de transmission sur la base de l'état de charge dans ces deux canaux ou plus.

11. Un procédé, comprenant:
le fait d'exploiter un élément de réseau dans un système de communications ;
le fait de communiquer sur une première interface radio avec un premier ensemble de canaux physiques ou sur une deuxième interface radio avec un deuxième ensemble de canaux physiques ;
le fait d'attribuer des communications à un canal physique de la première interface radio ou à un canal physique de la deuxième interface radio ; **caractérisé par**
le fait, pour une station mobile configurée pour supporter à la fois la première interface radio et la deuxième interface radio et apte à utiliser un service de communication vocale, de stocker (300, 500) un critère comprenant une condition relative à une dépendance à la volonté de la station mobile d'utiliser un service de communication vocale ;
le fait de tester (306, 506) le critère en vérifiant la réalisation de la condition ; et
le fait, selon les résultats du test du critère, soit d'attribuer (308, 508) des communications de canal de commande commun de la station mobile à un canal de la deuxième interface radio, soit de continuer (310, 510) l'utilisation d'un canal de commande commun de la première interface radio.

12. Procédé selon la revendication 11, comprenant en outre :
le fait d'attribuer des communications de canal de commande commun de la station mobile au canal de la deuxième interface radio en réponse au résultat indiquant que la station mobile ne souhaite pas utiliser le service de communication vocale.

13. Un produit de programme informatique lisible par un ordinateur et codant un programme informatique d'instructions pour exécuter un processus informatique pour commander des fonctions dans un système d'information, **caractérisé par** le procédé comprenant les étapes du procédé selon la revendication 11 ou la revendication 12.
